# EUROPÄISCHE PATENTSCHRIFT

(11) **EP 4 424 464 B1**
(45) Veröffentlichungstag und Bekanntmachung des Hinweises auf die Patenterteilung: **29.01.2025**
(21) Anmeldenummer: 24401009.6
(22) Anmeldetag: 01.03.2024
(51) Int. Cl.: B23Q 1/48, B23B 3/06, B23F 23/06, B23F 23/12

(54) **WERKSTÜCKAUFNAHMEEINHEIT FÜR EINE WERKZEUGMASCHINE, INSBESONDERE IN EINEM BEARBEITUNGSZENTRUM**
WORKPIECE HOLDING UNIT FOR A MACHINE TOOL, IN PARTICULAR IN A MACHINING CENTRE
UNITÉ DE RÉCEPTION DE PIÈCE POUR UNE MACHINE-OUTIL, EN PARTICULIER DANS UN CENTRE D'USINAGE

(30) Priorität: 01.03.2023 DE 102023105009
(43) Veröffentlichungstag der Anmeldung: 04.09.2024
(73) Patentinhaber: Starrag GmbH, 09117 Chemnitz (DE)
(72) Erfinder: Sand, Phillip, 08309 Eibenstock (DE); Claus, Sascha, 09385 Lugau (DE); Vogel, Eckardt, 01156 Dresden (DE); Hoppe, Thomas, 04600 Altenburg (DE)
(74) Vertreter: Rumrich, Gabriele

(56) Entgegenhaltungen:
- EP-A2- 1 155 771
- CH-A2- 701 185
- DE-A1- 102013 007 670
- DE-C1- 4 322 918

## Beschreibung

Die Erfindung betrifft eine Werkzeugmaschine mit einer Werkstückaufnahmeeinheit, insbesondere ein Bearbeitungszentrum nach dem Oberbegriff des ersten Patentanspruchs.

Achsschenkel werden derzeit auf zwei unterschiedlichen Maschinenarten bearbeitet. Zum Drehen des Zapfens werden Drehmaschinen in horizontaler oder vertikaler Bauart eingesetzt. Auf diesen Maschinen ist die Fräs- und Bohrbearbeitung nur stark eingeschränkt möglich, wenn überhaupt. Deshalb erfolgt die Weiterbearbeitung dieser Achsschenkel auf Bearbeitungszentren.

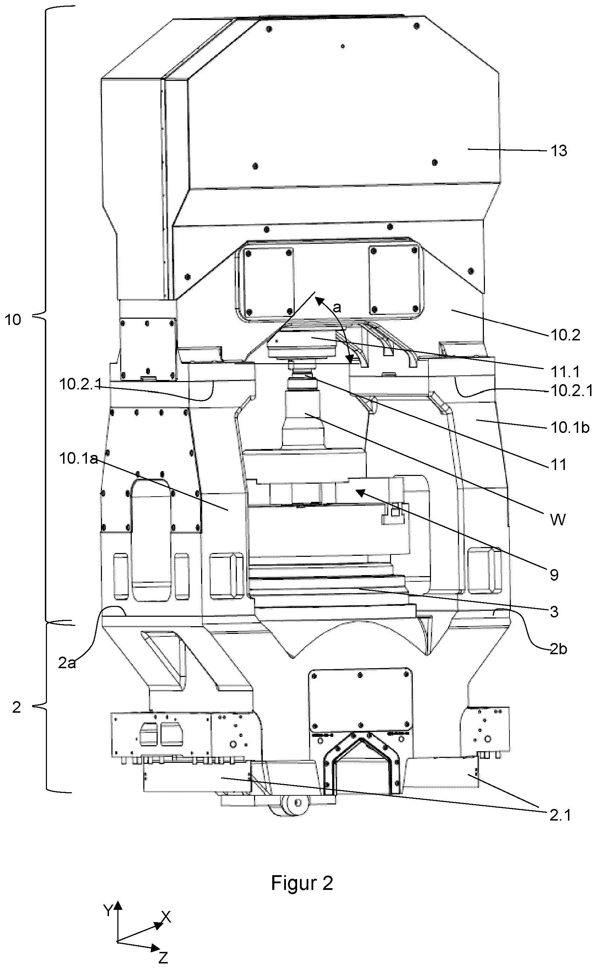

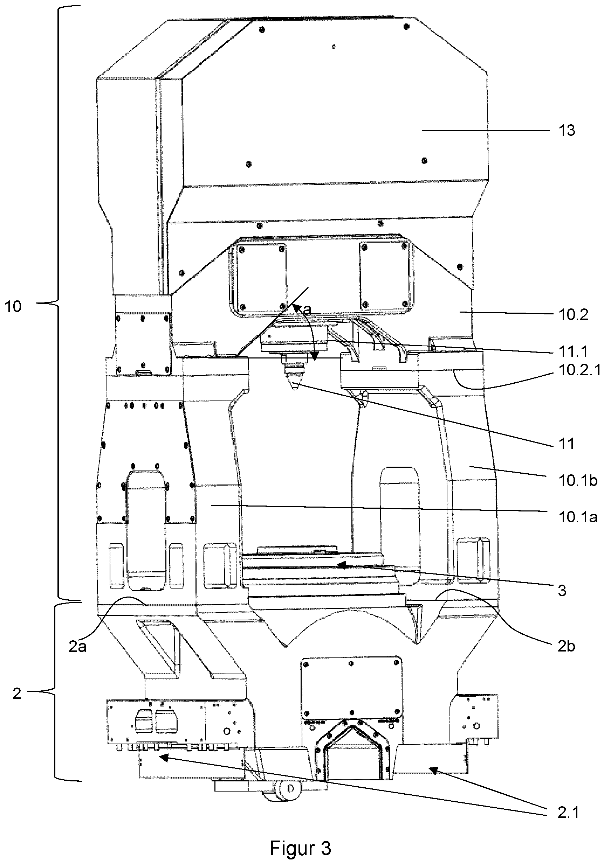

Aus DE 76 08 591 U ist eine Doppelspindel-Vertikaldrehmaschine bekannt, bei welcher oben zwei Reitstöcke und unten zwei Drehspindeln vorgesehen sind. Das Gestell besteht aus zwei seitlichen im Wesentlichen rechteckig ausgebildeten Wangen, die durch ein Oberteil von gleicher Breite miteinander verbunden sind, so dass eine Portalform entsteht. Der hier verwendete Gestellaufbau ist geeignet um voll rotationssymmetrische Werkstücke bearbeiten zu können, wo geringe Kräfte aus der Unwucht der Werkstücke entstehen. Die schmalen seitlichen Wangen bieten nur eine kleine Fläche zur stabilen Verbindung mit dem Oberteil. In der Seitenansicht der Fig. 2 ist zu erkennen, dass die Reitstockpinolen, welche in das Oberteil 3 integriert sind weit von den vertikalen Wangen über das Drehfutter auskragen. Bei hohen Kräften und bei Wärmeeintrag in das Gestell kann so ein Aufbiegen der Reitstockpinolen zu Formabweichungen am Werkstück führen. Aus der Druckschrift CH 712 442 A1 ist eine Zahnradbearbeitungsmaschine mit einer Einzentriervorrichtung bekannt, die zur Bearbeitung vorverzahnter Werkstücke verwendet wird. Auf dem Maschinenbett ist gestellfest ein zwischen zwei Positionen schwenkbarer Werkstückträger in Form eines Drehtisches oder gemäß Figur 2 eines Drehturms angeordnet. Der Werkstückträger ist um eine vertikale Werkstückträgerachse verschwenkbar und umfasst einen Gegenständer in der Art eines Überbaus. Auf dem Werkstückträger sind zwei Werkstückspindeln angeordnet, die sich bezüglich der Werkstückträgerachse diametral gegenüberstehen. Jede der Werkstückspindeln definiert eine Werkstückspindelachse (Fig. 3).

Die Werkstückspindeln sind mittels des Werkstückträgers jeweils zwischen einer Arbeitsposition und einer Parkposition verschwenkbar. In der Arbeitsposition befindet sich die jeweilige Werkstückspindel in einem Arbeitsraum. In der Parkposition befindet sich die jeweilige Werkstückspindel in einem Handlingsraum. Die Achse des Schwenktisches und die Achse der Werkstückspindeln fluchten daher nicht. Auf diese Weise lassen sich nur gering dimensionierte Antriebe und Werkstückträger realisieren, welche für eine hochgenaue Schleifbearbeitung mit geringen Prozesskräften ausreichend sind. Führung und Antrieb der Gegenhalterspitze sind augenscheinlich nicht in einer Achse angeordnet. Bei höheren Kräften, auch thermisch, können hier Ungenauigkeiten am Werkstück entstehen.

Aus der Druckschrift DE 43 22 918 C1 ist ein Bearbeitungszentrum bekannt, bei welchem ein Reitstock verwendet wird. Hier liegt der "Stellmotor" zum Verstellen der Pinole neben der Zentrierspitze, was keinen guten Kraftfluss darstellt und ebenfalls nur für die Aufnahme geringer Prozesskräfte geeignet ist.

Starke Antriebe und ein robuster Gestellaufbau, welche für eine Dreh- und Fräsbearbeitung stark unwuchtiger Werkstücke notwendig sind, lassen sich so nicht realisieren. Überdies wirkt sich die außermittige Krafteinleitung (Differenz zwischen Schwenkachse und Werkstückachse) nachteilig für die Krafteinleitung und damit für die Genauigkeit aus.

Weiterhin ist nachteilig, dass der schwenkbare Werkstückträger neben dem Gewicht des Werkstücks und den Gewichten der Werkstückspindeln auch das Gewicht des Gegenständers aufzunehmen hat, wodurch die Lagerung und der Dreh-/Schwenkmotor zur Realisierung der Schwenkbewegung entsprechend hoch auszulegen sind.

Ein derartiger Aufbau ist nicht geeignet um eine lineare Verstellbewegung, bspw. wie bei einer Zustellachse, zu realisieren.

Auf dem Maschinenbett erstreckt sich ein Ständer als Werkzeugträger, der in Richtung zum Werkstückträger horizontal verfahrbar ist und einen vertikal verfahrbaren Werkzeugschlitten mit einer Schleifschnecke trägt. Eine Drehbearbeitung ist somit bei dieser Maschine nicht vorgesehen.

Die Druckschrift EP 1 155 771 A2 offenbart eine Werkzeugmaschine mit einer Werkstückaufnahmeeinheit. Die Werkzeugmaschine weist dabei ein Maschinenbett und eine in Z-Richtung auf dem Maschinenbett verfahrbaren Schlittenbaugruppe sowie einen auf der Schlittenbaugruppe aufgenommenen Drehtisch mit einer Spanneinheit für ein Werkstück auf. Auf dem Maschinenbett erstreckt sich vertikal ein Ständer, an dem ein Bearbeitungswerkzeug in einer vertikalen Y-Richtung und in einer horizontalen X-Richtung verfahrbar ist.

Aus der Druckschrift DE 10 2013 007 670 A1 ist ein Drehtisch mit einem seitlichen Gegenständer zum horizontalen Spannen des Werkstücks am zweiten Ende bekannt.

Aufgabe der Erfindung ist es, eine Werkzeugmaschine mit einer Werkstückaufnahmeeinheit zu entwickeln, welche sowohl für unsymmetrische Werkstücke mit rotationssymmetrischen Werkstückkonturen als auch für voll rotationssymmetrische Werkstückkonturen geeignet ist, bei dem mittels dem Fertigungsverfahren Drehen Werkstücke mechanisch bearbeitbar sind und damit Prozessoptimierungen für komplette Fertigungslinien mit einem Maschinensystem zu ermöglichen.

Diese Aufgabe wird durch die kennzeichnenden Merkmale des ersten Patentanspruchs gelöst.

Vorteilhafte Ausgestaltungen ergeben sich aus den Unteransprüchen.

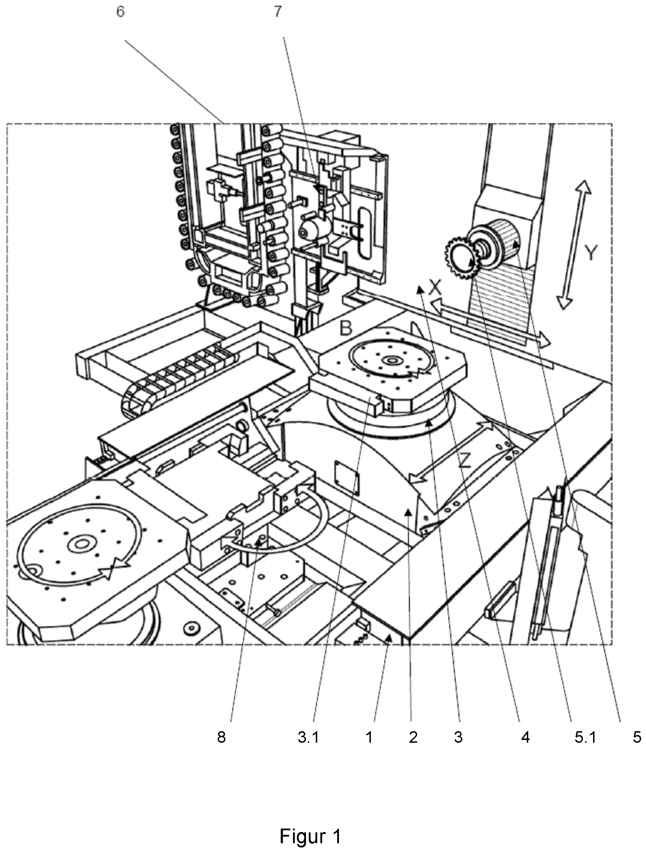

Dabei weist ein Bearbeitungszentrum mit einem Maschinenbett eine Werkstückaufnahmeeinheit in Form einer in Z-Richtung auf dem Maschinenbett verfahrbaren Schlittenbaugruppe und einen auf der Schlittenbaugruppe aufgenommenen Drehtisch auf, und wobei auf dem Maschinenbett ein sich vertikal erstreckenden Ständer angeordnet ist mit einem an dem Ständer in einer Werkzeugaufnahme gelagertes Bearbeitungswerkzeug, welches am Ständer in einer horizontalen X-Richtung und in einer vertikalen Y-Richtung verfahrbar ist (wie bei dem in Figur 1 gezeigten Stand der Technik), wobei an der in Z-Richtung verfahrbaren Schlittenbaugruppe in X-Richtung beidseitig zum Drehtisch eine erste Aufnahmefläche und eine zweite Aufnahmefläche angeordnet sind und auf der ersten Aufnahmefläche und der zweiten Aufnahmefläche ein Überbau angeordnet ist, der sich nach oben und über den Drehtisch erstreckt und Mittel zur Fixierung des Werkstücks W aufweist.

Der Überbau stützt sich dabei mit einem sich vertikal erstreckenden ersten Träger auf der ersten Aufnahmefläche und mit einem sich vertikal erstreckenden zweiten Träger auf der zweiten Aufnahmefläche ab, wobei sich auf den oberen Enden des ersten und zweiten Trägers ein Querträger abstützt bzw. aufliegt und mittig im Querträger des Überbaus zur zusätzlichen Fixierung des Werkstücks eine mittels eines Stellmotors vertikal verstellbare Zentrierspitze angeordnet ist, wobei zwischen der auf dem Drehtisch aufgenommenen Spanneinheit und der Zentrierspitze das Werkstück einspannbar ist.

Durch die Anordnung des Überbaus mit Zentrierspitze (in der Art eines Reitstocks) auf der Schlittenbaugruppe ist es möglich das Werkstück vertikal aufzunehmen und zu bearbeiten, bevorzugt mittels Drehbearbeitung.

Dabei können auch unsymmetrische Werkstücke bearbeitet werden, die teilweise eine große Unwucht erzeugen, da durch den Überbau diese Kräfte aufgenommen werden können.

Dabei liegt der Querträger mit seinen beiden endseitigen Unterseiten auf den oberen Enden des ersten und des zweiten Trägers auf und erstreckt sich dann spiegelbildlich ausgehend von jeder Unterseite in einem Winkel oder bogenförmig nach oben.

Die Lagerung der Zentrierspitzte erfolgt bevorzugt mittels einer Pinole mittig im Querträger und insbesondere oberhalb der Unterseiten des Querträgers.

Die Zentrierspitze befindet sich bevorzugt in ihrer mittigen vertikal ausgefahrenen Position im Wesentlichen im Bereich der Unterseiten des Querträgers oder nur etwas unterhalb der oberen Enden der vertikalen Träger.

Vorteilhafter Weise liegen die jeweiligen beidseitigen Aufnahmeflächen der Schlittenbaugruppe zur Aufnahme der beiden vertikalen Träger im Wesentlichen über den Führungen der Schlittenbaugruppe zu deren Verfahrbarkeit auf dem Maschinenbett, da dadurch die Kräfte besser aufgenommen werden.

Als Spanneinheit, die auf dem Drehtisch angeordnet ist, dient beispielsweise ein Mitnahme- oder Backenfutter, insbesondere mit einer im Futter integrierten, ausrichtbaren Zentrierspitze. Bevorzugt wird ein Dreibackenfutter mit Zentrierspitze eingesetzt.

Zwischen der Zentrierspitze des Dreibackenfutters und der Zentrierspitze des reitstockartig wirkenden Überbaus wird das Werkstück vertikal spannbar.

Weiterhin ist das Werkstück mit der Zentrierspitze in die Bearbeitungslage bringbar und in dieser fixierbar.

Bevorzugt ist die Zentrierspitze in Form einer mitlaufenden Spitze ausgebildet und in einer Pinole wechselbar angeordnet.

Die vertikale Drehachse der Spanneinheit und die Längsachse der Zentrierspitze sollten dabei zueinander fluchten.

Der Überbau ist in Bezug auf dessen sich vertikal erstreckende mittige Achse symmetrisch oder im Wesentlichen symmetrisch in X-Richtung und/oder in Z-Richtung ausgeführt. Vorteilhafter Weise reduziert sich dabei der Überbau in seiner Länge und/oder Breite von unten nach oben symmetrisch oder im Wesentlichen symmetrisch, wodurch Gewicht eingespart werden kann.

Mit der erfindungsgemäßen Werkzeugmaschine ist erstmalig die Drehbearbeitung von in vertikaler Richtung aufgespannten Werkstücken in Form von Zapfen, Achsschenkeln oder anderen rotationssymmetrischen Bauteilen und auch nicht komplett rotationssymmetrischen Bauteilen realisierbar.

Gegenstand der Patentanmeldung ist ein mit einer Schlittenbaugruppe verfahrbarer, auf der Schlittenbaugruppe stillstehender, jochförmiger Überbau mit einem rotierenden Drehtisch, der mit einer gegenüber des Drehtisches angeordneten Pinole insbesondere mit Zentrierspitze oder ggf. Konusaufnahme ausgestattet ist, die das Drehen und Fräsen in Backenfuttern und zwischen den Zentrierspitzen in Mitnahmefuttern ermöglicht.

Die Werkstückaufnahmeeinheit ist so ausgeführt, dass die Pinole symmetrisch in die Gestellkonstruktion integriert ist. Eine Formabweichung am Werkstück durch leichtes aufbiegen wie bei Konstruktionen mit seitlicher Führung der Pinole (siehe bspw. vorgenanntes Gebrauchsmuster DE 76 08 591 U) ist somit nicht möglich. Thermische Einflüsse führen zu einer symmetrisch gleichmäßigen Ausdehnung und somit nicht zu Formabweichungen am Werkstück.

Die symmetrisch stabile Gestellkonstruktion ist ebenfalls geeignet um hohe Kräfte aufnehmen zu können, welche bspw. durch die Drehbearbeitung unsymmetrischer Werkstücke mit rotationssymmetrischen Geometrieanteilen wie bei Achsschenkeln, auftreten.

Über den Hub von bis zu 160 mm der Pinole des Überbaus und somit der Zentrierspitze können rotationssymmetrische Werkstücke mit geschmiedeten, gegossenen oder mechanisch bearbeiteten Zentrierbohrungen zwischen zwei Zentrierspitzen aufgenommen werden.

Eine Zentrierspitze befindet sich in der Spanneinheit auf dem Drehtisch, die andere an dem in der Art eines Reitstocks wirkenden Überbau.

Die Aufnahme der Werkstücke erfolgt unten in einem Mitnahme- oder Backenfutter. Die Zentrierung des Werkstücks erfolgt dabei im Backenfutter durch das gleichförmige Schließen der Backen oder im Mitnahmefutter mit einer im Futter integrierten, ausrichtbaren Zentrierspitze.

Mit der in der Pinole befindlichen mitlaufenden Spitze oben wird das Werkstück in die Bearbeitungslage gebracht. Unterschiedliche Werkstücklängen können beispielsweise über ein Wegmesssystem in der Pinole ausgeglichen werden. Die mitlaufende Zentrierspitze in der Pinole ist bevorzugt wechselbar.

Während der Bearbeitung werden die Werkstücke zusätzlich radial (Mitnahmefutter) oder zentrisch ausgleichend (Backenfutter) gespannt. Die Lage der Rotationsachse der Werkstücke wird über die beiden Zentren bestimmt. Über einen Festanschlag im Spannfutter erfolgt die radiale Ausrichtung in Mitnahmefuttern.

Die Kraftübertragung für den Drehprozess erfolgt über die feste Anlage im Mitnahmefutter oder die ausgleichende Spannung im Backenfutter.

Zur Aufnahme des Spannfutters dient beispielsweise ein Spindelflansch mit Kurzkegel 11, nach DIN ISO 702-I A2, mit integrierter Medienübergabe für Luft und Hydraulik. Während der Bearbeitung der Werkstücke dienen im Überbau in Form des Gegenhalters befindliche Kühlmitteldüsen mit dem entsprechend gerichteten Kühlmittelaustritt zur Prozesskühlung bzw. -schmierung und zum Entfernen von Spänen.

Die Be- und Entladung der Werkstücke kann händisch, mittels Knickarmroboter oder über eine Be-/Entladeeinheit erfolgen.

Während des Bearbeitungsprozesses verhindert die Steuerung der Maschine über die Sicherheitstechnik im jochförmigen Überbau das Öffnen der Spannung und das damit verbundene Herausschleudern von Werkstücken. Eine sichere Werkstückspannung wird somit gewährleistet.

Alle Prozessschritte sind auf einem Maschinensystem durchführbar. Sowohl die Dreh- als auch die Fräsbearbeitung können in einer Bearbeitungslinie auf fast baugleichen Maschinen durchgeführt werden.

Die Schrupp- und Schlichtbearbeitung der Flanschflächen am Achsschenkel erfolgt nun durch die neue Werkstückaufnahmeeinheit bevorzugt durch Walzfräsen.

Dadurch kann die zeitintensive Schruppdrehbearbeitung der Flanschflächen durch Drehen, vor allem bei unterbrochenen Schnitten mit oftmals hoher Ratter- oder Schwingungsneigung und dem damit verbundenen Werkzeugverschleiß, vermieden werden. Alternativ kann die Schlichtbearbeitung mit Drehwerkzeugen durchgeführt werden.

Vorteilhafter Weise ist ein Hauptzeitparalleler Wechsel der Werkzeugschneiden durch den Einsatz von Schwesterwerkzeugen möglich, bei einem ausreichenden Werkzeugmagazin.

Durch den Einsatz von Bearbeitungszentren zum Drehen können das oftmals begrenzte Werkzeugmagazin bzw. der Werkzeugrevolver an Drehmaschinen durch Magazine mit mehreren Schwesterwerkzeugen ersetzt werden. Bearbeitungslinien können dadurch länger autark, ohne Eingriff des Bedienpersonals, betrieben werden.

Durch den hauptzeitparallelen Tausch von verbrauchten Werkzeugen aus dem Werkzeugmagazin bietet das Bearbeitungszentrum die Vorrausetzung der voll automatisierten Werkzeugversorgung im laufenden Bearbeitungsprozess. An Hand einer bekannten Verschleißüberwachung können verbrauchte Werkzeuge Hauptzeitparallel automatisiert gewechselt werden.

Mit vorliegendem, jochförmigem Überbau ist die Drehbearbeitung des Zapfens von z.B. Achsschenkeln oder anderen rotationssymmetrischen Bauteilen, die zwischen den Spitzen gespannt werden können, auf einem Bearbeitungszentrum möglich.

Durch die Werkstückaufnahmeeinheit mit einem Überbau in Form eines Reitstocks in einer kompletten Bearbeitungslinie mit fast baugleichen Maschinen können Vorteile, wie die gleiche Be- und Entladung, Steuerung, Bedienelemente, Automation, Zubehörelemente, wie z.B. Späneförderer, Kühlmittelanlagen, Absaugungen u.v.m. genutzt werden.

Die Lage des Bauteiles ist während des Transportes und zu Beginn der Bearbeitung vertikal und bietet damit Vorteile für die Automatisierung sowie den Transport der Werkstücke in einer Bearbeitungslinie. Die Be- und Entladung der Maschinen erfolgt über identische Ladeluken. Das Maschinenkonzept mit den fast baugleichen Maschinen ermöglicht ein kompaktes Anlagenlayout.

Die Instandhaltung von Maschinen gleicher Bauart ist einfacher und kostengünstiger. Eine Bevorratung von Ersatzteilen ist nur für einen Maschinentyp notwendig. Service und vorbeugende Instandhaltung müssen nur für ein Maschinensystem eines Herstellers vorgesehen werden.

Die Sicherheits- und Steuerungstechnik ist an allen Bearbeitungsstationen in kompletten Fertigungslinien gleich. Digitale Transformationen sowie Prozesssteuerungen und - optimierungen können an einem einheitlichen System durchgeführt werden. Schulungsaufwände für das Gesamtsystem und die einzelnen Maschinen werden auf ein Minimum reduziert. Durch das durchgehende Maschinensystem von einem Hersteller sind die Aufwände für die Schulungen des Bedien-, Programmier-, Wartungs- und Instandhaltungspersonals auf ein System begrenzt.

Die Erfindung wird nachfolgend an einem Ausführungsbeispiel anhand von Zeichnungen näher erläutert. Es zeigen:
- Figur 1: einen prinzipiellen Aufbau einer Werkzeugmaschine bzw. eines Bereiches eines Bearbeitungszentrums nach dem Stand der Technik,
- Figur 2: die Schlittenbaugruppe mit Werkstück in 3D-Ansicht,
- Figur 3: die Schlittenbaugruppe ohne Werkstück und ohne Dreibackenfutter in 3D-Ansicht,
- Figur 4: die Vorderansicht gemäß Figur 2,
- Figur 5: die Seitenansicht gemäß Figur 2,
- Figur 6: Darstellung gemäß Figur 2, jedoch ohne Verkleidung des Stellmotors,
- Figur 7: die Einzeldarstellung des Reitstocks/Überbaus mit unverkleidetem Gegenhalter,
- Figur 8: die Einzeldarstellung der Schlittenbaugruppe mit Drehtisch,
- Figur 9: die Prinzipdarstellung einer Werkzeugmaschine mit der auf dem Bett 1 aufgenommenen Schlittenbaugruppe 2 mit Überbau 10.

**Figur 1** zeigt einen prinzipiellen Aufbau eines Teils einer Werkzeugmaschine/eines Bearbeitungszentrums nach dem Stand der Technik. Diese weist ein Maschinenbett 1 eine in Z-Richtung auf dem Maschinenbett 1 verfahrbare Schlittenbaugruppe 2, einen auf dem Schlitten 2 aufgenommenen Drehtisch 3, einen Ständer 4 und ein an dem Ständer 4 in einer vertikalen Achse 5 drehbar gelagertes rotierendes Bearbeitungswerkzeug 5.1 auf, hier ein Fräswerkzeug, welches am Ständer 4 in einer horizontalen X-Richtung und in einer Vertikalen Y-Richtung verfahrbar ist. Auf dem Drehtisch 3 ist eine Palette 3.1 aufgenommen, die zur Aufspannung des zu bearbeitenden nicht dargestellten Werkstücks dient. Es sind weiterhin ein Werkzeugmagazin 6 und ein Werkzeugwechsler 7 vorgesehen.

Das Ein- und Auswechseln eines Werkstücks wird durch wechseln der Palette 3.1 mit einem Werkstückwechsler 8 realisiert.

Für die Drehbearbeitung einer Außenkontur eines Werkstücks ist ein nicht drehbares Werkzeug vorzusehen. Üblicher Weise wird das Werkstück zwischen zwei Spitzen aufgenommen und rotiert, was bei dem Bearbeitungszentrum nach dem Stand der Technik nicht vorgesehen ist.

Für die Realisierung einer vertikalen Drehbearbeitung eines Werkstücks W in einem Bearbeitungszentrum wird eine erfindungsgemäße Werkstückaufnahmeeinheit vorgesehen, die in den **Figuren 2 bis 8** in verschiedenen Darstellungsvarianten (teilweise ohne Werkstück W) gezeigt wird.

Ständer, Werkzeug sowie Maschinenbett sind in den **Figuren 2 bis 8** nicht dargestellt.

Auf dem Drehtisch 3 des Bearbeitungszentrums ist eine Spanneinheit 9 für ein erstes Ende eines Werkstücks W vorgesehen (siehe **Figuren 2****,** **4****,** **5****).** Insbesondere erfolgt die Aufnahme des Werkstücks W unten auf dem Drehtisch 3 in einem Mitnahme- oder Backenfutter, z.B. einem Dreibackenfutter 9 (bevorzugt mit Zentrierspitze).

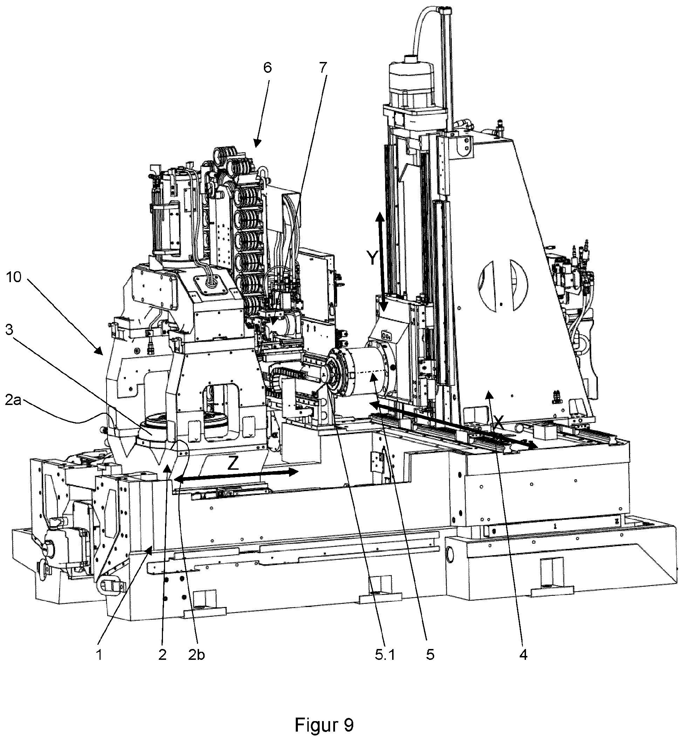

Weiterhin ist auf der in Z-Richtung auf dem Maschinenbett 1 (nur in **Figur 9** dargestellt) verfahrbaren Schlittenbaugruppe 2 beidseitig zum Drehtisch 3 über den beiden Führungen 2.1 der Schlittenbaugruppe 2 ein sich vertikal erstreckender Überbau 10 mit sich vertikal erstreckenden und zueinander fluchtende Trägern 10.1a und 10.1b angeordnet. Dazu sind an der Schlittenbaugruppe 2 beidseitig zum Drehtisch 3 eine erste Aufnahmefläche 2a und eine zweite Aufnahmefläche 2b angeordnet.

Die Aufnahmeflächen 2a und 2b erstrecken sich in Richtung der Führungen 2.1 und somit in Z-Richtung.

Auf der ersten Aufnahmefläche 2a und der zweiten Aufnahmefläche 2b ist hier der Überbau 10 angeordnet, der sich nach oben und über den Drehtisch 3 erstreckt und Mittel zur Fixierung des Werkstücks W aufweist. Dabei stütz sich ein Träger 10.1a des Überbaus 10 auf der ersten Aufnahmefläche 2a und ein zweiter Träger 10.1b auf der zweiten Aufnahmefläche 2b der Schlittenbaugruppe 2 ab.

Auf dem oberen Ende der beiden Träger 10.1a und 10.1b stützt sich ein Querträger 10.2 ab. Mittig im Querträger 10.2 des Überbaus 10 ist eine vertikal verstellbare Zentrierspitze 11 in einer Pinole 11.1 angeordnet. Dazu ist ein Stellmotor 12 für die Realisierung dieser Stellbewegung in dem Querträger 10.2 aufgenommen.

Der Querträger 10.2 liegt mit seinen beiden Unterseiten 10.2.1 auf den oberen Enden der Träger 10.1a und 10.1b auf und erstreckt sich dann spiegelbildlich ausgehend von jeder Unterseite 10.2.1 in einem Winkel a nach oben. Dadurch liegt die Befestigung/Lagerung in Form der Pinole 11.1 der Zentrierspitzte 11 mittig im Querträger 10.2 und oberhalb der Unterseiten 10.2.1 des Querträgers 10.2 und die Zentrierspitze 11 befindet sich in ihrer mittigen vertikal ausgefahrenen Position im Wesentlichen im Bereich der Unterseiten 10.2.1 des Querträgers 10.2. oder nur etwas unterhalb der oberen Enden der vertikalen Träger 10.1a und 10.1b.

Durch die nach oben "gewölbte" bzw. sich mittig nach oben erstreckende Tragstruktur des Querträgers 10.2 des Überbaus 10 können höhere Axialkräfte aufgenommen werden, als bei einer geradlinigen Erstreckung.

Die nicht bezeichneten Maße Innerhalb des Überbaus 10, insbesondere die (nicht bezeichnete) Höhe zwischen der Zentrierspitze 11 und der Spanneinheit 9 richten sich maßgeblich nach den Abmessungen, insbesondere der Höhe des zu bearbeitenden Werkstücks W.

In den **Figuren 2 bis** 6 ist der Überbau 10 mit einer Verkleidung 13 des Stellmotors 12 dargestellt, die an dem Querträger 10.2 befestigt ist und den Stellmotor 12 in diesen Darstellungen verdeckt.

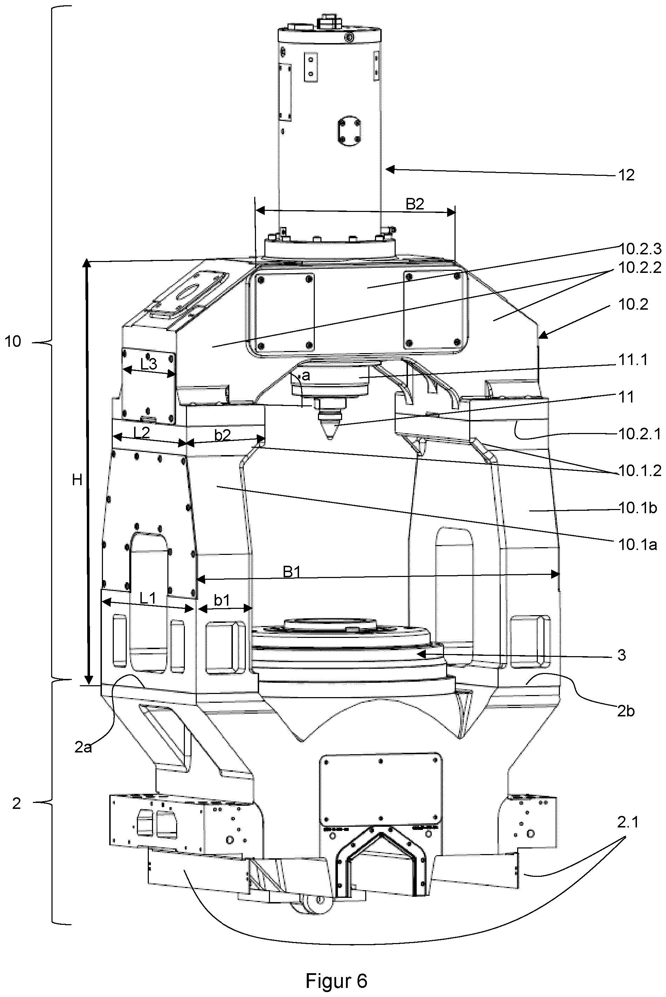

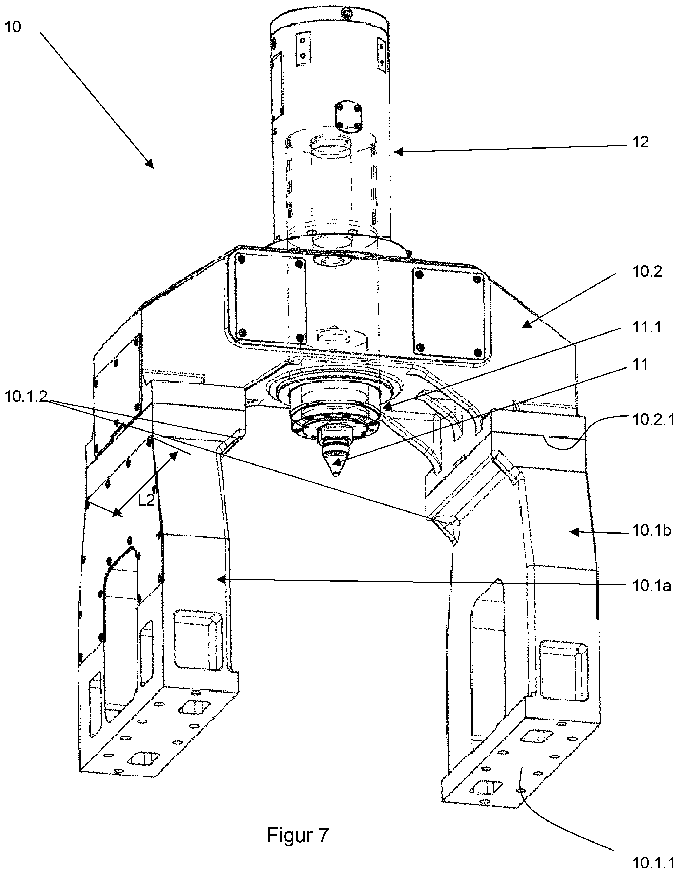

In den **Figuren 6** **und** 7 wurde die Verkleidung 13 des Stellmotors 12 nicht dargestellt und es ist ersichtlich, dass dieser sich über den Querträger 10.2 mittig nach oben erstreckt. Dabei zeigt **Figur** 6 die gesamte Werkstückaufnahmeeinheit und **Figur** 7 nur den Überbau 10.

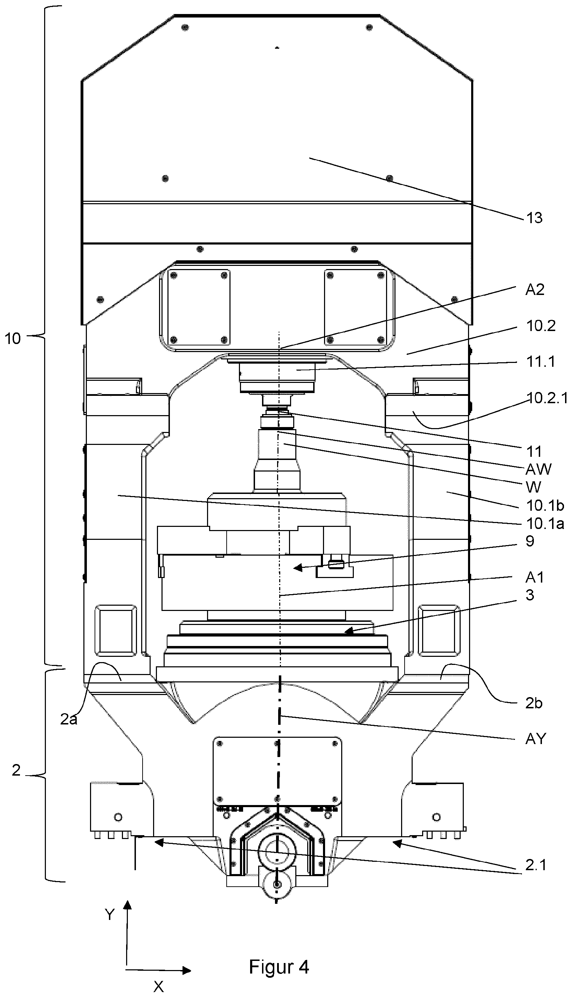

In **Figur** 4 wurde angedeutet, dass die vertikale Drehachse der Spanneinheit A1 (z.B. eines Dreibackenfutters mit Zentrierspitze) und eine Längsachse A2 der Zentrierspitze 11 sowie die Längsachse AW des Werkstücks W zueinander fluchten.

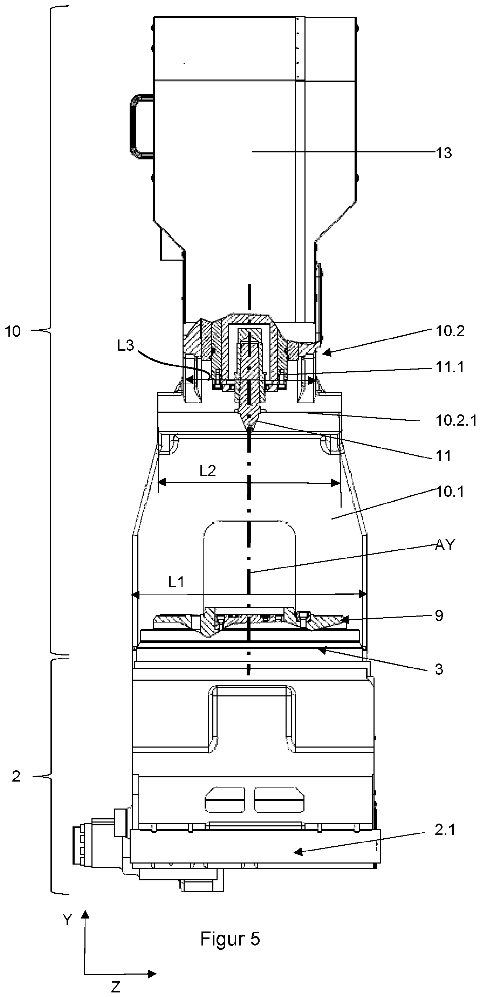

Der Überbau 10 ist in Bezug auf dessen sich vertikal erstreckende Achse AY, mit welcher auch die Drehachse der Spanneinheit A1 und die Längsachse der Zentrierspitze A2 fluchten, symmetrisch in X-Richtung (siehe **Figur 4****)** und in Z-Richtung (siehe **Figur 5****)** ausgeführt.

Beispielsweise aus **Figur 6** ist ersichtlich, dass die durch die Innenseiten der vertikalen Träger 10.1a, 10.1b gebildete Öffnung (Arbeitsraum) eine Breite aufweist, die sich nach oben in Richtung zur Unterseite 10.2.1 des Querträgers 10.2 auf eine geringere Breite verringert.

Es ist zu entnehmen, dass der Überbau 10 im unteren Bereich der vertikalen Träger 10.1a, 10.1b eine Länge L1 aufweist und es ist ersichtlich, dass sich die Länge des Überbaus 10 nach oben reduziert und zwar auf eine Länge L2 im Bereich der Anlageflächen zwischen den vertikalen Trägern 10.1a und 10.1b und dem Querträger 10.2 und dass sich der Querträger 10.2 in Richtung zum Aufnahmebereich der Pinole 11.1 auf eine Länge L3 reduziert.

Die Breite b1 der vertikalen Träger 10.1a, 10.1b vergrößert sich durch eine nach innen weisende Auskragung/Schräge 10.1.2 auf eine Breite b2 im Bereich der Auflageflächen bzw. Unterseite 10.2.1 des Querträgers 10.2. Dadurch weist der Querträger 10.2 eine große Auflagefläche auf.

Der Querträger 10.2 erstreckt sich in einer im Wesentlichen prismatischen Form nach oben, wobei beidseitig von außen nach innen schräg nach oben abgewinkelte Bereiche 10.2.2 vorhanden sind und sich dazwischen ein oberer mittiger und sich horizontal erstreckender Bereich 10.2.3 des Querträgers 10.2 zur Aufnahme der Pinole 11.1 für die Aufnahme der Zentrierspitze 11 angeordnet ist.

Der Überbau 10 weist gemäß **Figur 6** eine Höhe H auf und der Arbeitsraum zur Spannung und Bearbeitung des hier nicht dargestellten Werkstücks befindet sich in dem mittigen Freiraum des Überbaus 10 oberhalb des Drehtisches 3 und innerhalb der vertikalen Träger 10.1a und 10.1b und des Querträgers 10.2.

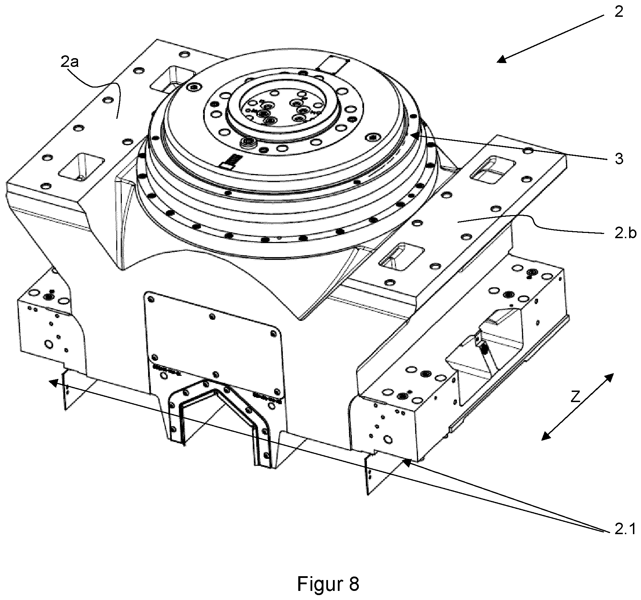

In **Figur 8** ist die Schlittenbaugruppe 2 mit dem Drehtisch 3 dargestellt. Die Schlittenbaugruppe 2 wird über Führungen 2.1 auf dem Maschinenbett 1 (siehe **Figur 9****)** in Z-Richtung verfahrbar aufgenommen.

Damit ist die Werkstückaufnahmeeinheit mit dem Drehtisch 3 und dem Überbau 10 auf dem Maschinenbett 1 **(****Figur 9****)** über die Schlittenbaugruppe 2 in Z-Richtung verstellbar angeordnet.

Die Schlittenbaugruppe 2 weist beidseitig zum Drehtisch 3 zueinander parallele Auflageflächen 2a, 2b auf, die zur Aufnahme des Überbaus 10 dienen, der mit den unteren Flächen 10.1.1 der Träger 10.1a und 10.1b darauf positioniert wird.

Die Auflageflächen 2a, 2b der Schlittenbaugruppe 2 liegen dabei im Wesentlichen über den Führungen 2.1 und sind in Z-Richtung ausgerichtet.

Das Werkstück W wird zwischen dem Dreibackenfutter 9 und der Zentrierspitze 11 gespannt (siehe **Figuren 2** **und** **4****).**

Zwischen den in Richtung zum Werkstück W weisenden Seiten der Träger 10.1a und 10.1b und des Querträgers 10.2 ist der Bearbeitungsraum ausgebildet.

In **Figur 9** wird eine Werkzeugmaschine in der Art eines Fräsbearbeitungszentrums dargestellt.

Diese weist ein Maschinenbett 1 auf, welches eine in Z-Richtung verfahrbare Schlittenbaugruppe 2 trägt. Auf der den Aufnahmeflächen 2a, 2b der Schlittenbaugruppe 2 ist der Überbau 10 angeordnet, der sich brückenartig nach oben und über den Drehtisch 3 erstreckt. Nicht ersichtlich sind hier die Pinole und die Zentrierspitze des Überbaus 10. Auf dem Maschinenbett 1 ist gestellfest ein Ständer 4 angeordnet. Der Ständer 4 weist ein in einer vertikalen Achse 5 drehbar gelagertes rotierendes Bearbeitungswerkzeug 5.1 auf, hier ein Fräswerkzeug, welches wie beim Stand der Technik am Ständer 4 in einer horizontalen X-Richtung und in einer vertikalen Y-Richtung verfahrbar ist. Auf dem Drehtisch 3 wird üblicher Weise eine Palette (nicht dargestellt) aufgenommen, die zur Aufspannung des zu bearbeitenden nicht dargestellten Werkstücks dient oder die Spannung des Werkstücks erfolgt in einem auf dem Drehtisch 3 aufgenommenen Dreibackenfutter (hier ebenfalls nicht dargestellt). Es sind weiterhin ein Werkzeugmagazin 6 und ein Werkzeugwechsler 7 vorgesehen.

Das Ein- und Auswechseln eines Werkstückes wird durch ein nicht dargestelltes und außerhalb der Maschine befindliches Handlinggerät realisiert.

Zur Bearbeitung eines Werkstücks (in **Figur 9** nicht dargestellt) wird der Überbau 10 vor dem Ständer 4 positioniert und das am Ständer 4 in X und Y verfahrbare Bearbeitungswerkzeug 5.1 greift in den Bearbeitungsraum zur Bearbeitung des Werkstücks ein. Das Werkzeug (zur Drehbearbeitung ein Drehwerkzeug/Drehmeisel) rotiert dabei nicht, sondern das Werkstück wird mittels des Drehtisches 3 in eine Drehbewegung gebracht.

Durch die vertikale Ausrichtung des Werkstücks zwischen der Aufspannung auf dem Drehtisch 3 und der Zentrierspitze 11 ist es möglich, dieses auf einem Fräsbearbeitungszentrum einer Drehbearbeitung zu unterziehen, wenn als Werkzeug ein Drehmeißel verwendet wird.

Es ist bei Einsatz eines Fräswerkzeuges als Bearbeitungswerkzeug 5.1, wie in **Figur 1** dargestellt, selbstverständlich auch eine Fräsbearbeitung des Werkstücks möglich, bevorzugt in der gleichen Aufspannung.

Die Zustellbewegung des Werkstücks W in Richtung zum Bearbeitungswerkzeug 5.1 erfolgt über eine Bewegung der Schlittenbaugruppe 2 mit der Werkstückaufnahme (Drehtisch 3, Spanneinheit 9 und Überbau 10) in Z-Richtung - d.h. in Richtung des Ständers 4.

Die Zentrierspitze 11 wirkt zur sicheren Spannung des Werkstücks W mit einer Gegenkraft in Richtung zur Spanneinheit 9 auf dem Drehtisch 3.

Zur Reduzierung des Gewichts weisen die vertikalen Träger 10.1a und 10.1b nicht bezeichnete Aussparungen auf.

Weiterhin ist vorteilhaft, dass sich die Länge und die Breite des Überbaus 10 von unten nach oben symmetrisch oder im Wesentlichen symmetrisch von einer Länge L1 auf eine Länge L3 und von einer Breite B1 auf eine Breite B2 reduziert.

Ein Wesentlicher Vorteil der erfindungsgemäßen Lösung in Form des Werkstückträgers bzw. der Werkstückaufnahmeeinheit besteht darin, dass diese vollständig achssymmetrisch aufgebaut ist, d.h. vom Werkstücktisch/Drehtisch 3 über die Pinole 11.1 mit Zentrierspitze 11, bis hin zur Führung und dem Antrieb der Pinole 11.1 ist alles in einer Achse.

### Bezugszeichenliste

- 1: Maschinenbett
- 2: Schlittenbaugruppe
- 2.1: Führungen
- 2a: erste Aufnahmefläche
- 2b: zweite Aufnahmefläche
- 3: Drehtisch
- 3.1: Palette
- 4: Ständer
- 5: Achse
- 5.1: Bearbeitungswerkzeug
- 6: Werkzeugmagazin
- 7: Werkzeugwechsler
- 8: Werkstückwechsler
- 9: Spanneinheit / Dreibackenfutter (bevorzugt mit Zentrierspitze)
- 10: Überbau
- 10.1a: erster Träger
- 10.1b: zweiter Träger
- 10.1.1: untere Fläche
- 10.1.2: Schräge
- 10.2: Querträger
- 10.2.1: Unterseite des Querträgers
- 10.2.2: schräge Bereiche des Querträgers
- 10.2.3: horizontaler Bereich des Querträgers
- 11: Zentrierspitze
- 11.1: Pinole
- 12: Stellmotor
- 13: Verkleidung
- a: Winkel am Querträger
- A1: Drehachse der Spanneinheit
- A2: Längsachse der Zentrierspitze
- AY: Achse des Überbaus
- AW: Längsachse des Werkstücks
- b1: Breite der vertikalen Träger unten
- b2: Breite der vertikalen Träger oben
- B1: Breite des Überbaus
- B2: Breite des Querträgers oben
- H: Höhe des Überbaus
- L1: Länge der Träger an der Unterseite
- L2: Länge der Träger an der Oberseite
- L3: Länge des Querträgers im Bereich der Pinole
- W: Werkstück

## Patentansprüche

1. Werkzeugmaschine, insbesondere Bearbeitungszentrum, mit einer Werkstückaufnahmeeinheit, wobei die Werkzeugmaschine ein Maschinenbett (1) und eine in Z-Richtung auf dem Maschinenbett (1) verfahrbaren Schlittenbaugruppe (2) und einen auf der Schlittenbaugruppe (2) aufgenommenen Drehtisch (3) mit einer Spanneinheit (9) für ein Werkstück (W) aufweist und mit einem auf dem Maschinenbett (1) sich vertikal erstreckenden Ständer (4) und einem an dem Ständer (4) gelagertes Bearbeitungswerkzeug (5.1), welches am Ständer (4) in einer vertikalen Y-Richtung und in einer horizontalen X-Richtung verfahrbar ist, **dadurch gekennzeichnet, dass** an der in Z-Richtung verfahrbaren Schlittenbaugruppe (2) beidseitig zum Drehtisch (3) eine erste Aufnahmefläche (2a) und eine zweite Aufnahmefläche (2b) angeordnet sind und dass auf der ersten Aufnahmefläche (2a) und der zweiten Aufnahmefläche (2b) ein Überbau angeordnet ist, der sich nach oben und über den Drehtisch (3) erstreckt und Mittel zur Fixierung des Werkstücks (W) aufweist.

2. Werkzeugmaschine nach Anspruch 1, **dadurch gekennzeichnet, dass** sich der Überbau (10) mit einem sich vertikal erstreckenden ersten Träger (10.1a) auf der ersten Aufnahmefläche (2a) und mit einem sich vertikal erstreckenden zweiten Träger (10.1b) auf der zweiten Aufnahmefläche (2b) abstützt, wobei sich auf den oberen Enden des ersten und zweiten Trägers (10.1a, 10.1b) ein Querträger (10.2) abstützt und mittig im Querträger (10.2) des Überbaus (10) zur zusätzlichen Fixierung des Werkstücks (W) eine mittels eines Stellmotors (12) vertikal verstellbare Zentrierspitze (11) angeordnet ist, wobei zwischen der auf dem Drehtisch (3) aufgenommenen Spanneinheit (9) und der Zentrierspitze (11) das Werkstück (W) einspannbar ist.

3. Werkzeugmaschine nach Anspruch 2, **dadurch gekennzeichnet, dass** der Querträger (10.2) mit seinen beiden Unterseiten (10.2.1) auf den oberen Enden der Träger (10.1a, 10.1b) aufliegt und sich dann spiegelbildlich ausgehend von jeder Unterseite (10.2.1) in einem Winkel (a) nach oben erstreckt.

4. Werkzeugmaschine nach einem der vorgenannten Ansprüche, **dadurch gekennzeichnet, dass** die Schlittenbaugruppe (2) über Führungen in Z-Richtung auf dem Maschinenbett (2) gelagert ist und die erste Auflagefläche (2.a) und die zweite Auflagefläche (2b) der Schlittenbaugruppe (2) zur Aufnahme der Träger (10.1a und 10.1b) im Wesentlichen über den Führungen (2.1) der Schlittenbaugruppe (2) angeordnet sind.

5. Werkzeugmaschine nach einem der vorgenannten Ansprüche 2-4, **dadurch gekennzeichnet, dass** die Spanneinheit ein Mitnahme- oder Backenfutter mit einer im Futter integrierten ausrichtbaren Zentrierspitze, insbesondere ein Dreibackenfutter (9) mit Zentrierspitze, ist und dass zwischen der Zentrierspitze des Dreibackenfutters und der Zentrierspitze (11) des Überbaus (10) das Werkstück (W) spannbar ist.

6. Werkzeugmaschine nach einem der vorgenannten Ansprüche 2-5, **dadurch gekennzeichnet, dass** mit der Zentrierspitze (11) das Werkstück (W) in die Bearbeitungslage bringbar ist.

7. Werkzeugmaschine nach einem der Ansprüche 2-6, **dadurch gekennzeichnet, dass** die Zentrierspitze (11) in Form einer mitlaufenden Spitze ausgebildet ist und in einer Pinole (11.1) wechselbar angeordnet ist.

8. Werkzeugmaschine nach einem der vorgenannten Ansprüche, **dadurch gekennzeichnet, dass** eine vertikale Drehachse (A1) der Spanneinheit und des Drehtisches (3), eine Längsachse (A2) der Zentrierspitze (11) sowie eine Werkstücklängsachse (WA) des Werkstücks (W), zueinander fluchten.

9. Werkzeugmaschine nach einem der vorgenannten Ansprüche, **dadurch gekennzeichnet, dass** der Überbau (10) in Bezug auf dessen sich vertikal erstreckende Achse (AY) symmetrisch oder im Wesentlichen symmetrisch in Y-Richtung und/oder in Z-Richtung ausgeführt ist.

10. Werkzeugmaschine nach einem der vorgenannten Ansprüche, **dadurch gekennzeichnet, dass** der Überbau (10) sich in seiner Länge und/oder Breite von unten nach oben symmetrisch oder im Wesentlichen symmetrisch reduziert.

11. Werkzeugmaschine nach einem der vorgenannten Ansprüche, **dadurch gekennzeichnet, dass** mit dieser die Drehbearbeitung von in vertikaler Richtung aufgespannten Werkstücken in Form von Zapfen, Achsschenkeln oder anderen rotationssymmetrischen Bauteilen auf dem Bearbeitungszentrum realisierbar ist.

## Claims

1. Machine tool, in particular a machining center, having a workpiece receiving unit, wherein the machine tool has a machine bed (1) and a carriage assembly (2) that can be moved in the Z-direction on the machine bed (1), and a rotary table (3) that is accommodated on the carriage assembly (2) and has a clamping unit (9) for a workpiece (W), and having a vertically extending stand (4) on the machine bed (1) and a machining tool (5.1) mounted on the stand (4), which tool can be moved on the stand (4) in a vertical Y-direction and in a horizontal X-direction,
**characterized in that** a first receiving surface (2a) and a second receiving surface (2b) are arranged on the carriage assembly (2), which can be moved in the Z-direction, on both sides relative to the turntable (3), and **in that** a superstructure is arranged on the first receiving surface (2a) and the second receiving surface (2b), which extends upwards and over the turntable (3) and has means for fixing the workpiece (W).

2. Machine tool according to claim 1, **characterized in that** the superstructure (10) is supported by a vertically extending first beam (10.1a) on the first receiving surface (2a) and by a vertically extending second beam (10.1b) on the second receiving surface (2b), wherein a crossbeam (10.2) is supported on the upper ends of the first and second beams (10.1a, 10.1b) and a centering tip (11) that is vertically adjustable by means of a servomotor (12) is arranged in the center of the crossbeam (10.2) of the superstructure (10) for the additional fixing of the workpiece (W), wherein the workpiece (W) can be clamped between the clamping unit (9) received on the turntable (3) and the centering tip (11).

3. Machine tool according to claim 2, **characterized in that** the crossbeam (10.2) rests with its two lower sides (10.2.1) on the upper ends of the beams (10.1a, 10.1b) and then extends in a mirror-inverted manner upwardly at an angle (a) from each lower side (10.2.1).

4. Machine tool according to one of the preceding claims, **characterized in that** the carriage assembly (2) is mounted on the machine bed (1) via guides in the Z-direction and the first bearing surface (2.a) and the second bearing surface (2b) of the carriage assembly (2) for accommodating the beams (10.1a and 10.1b) are arranged essentially above the guides (2.1) of the carriage assembly (2).

5. Machine tool according to one of the preceding claims 2-4, **characterized in that** the clamping unit is a drive or jaw chuck with an alignable centering tip integrated in the chuck, in particular a three-jaw chuck (9) with a centering tip, and **in that** the workpiece (W) can be clamped between the centering tip of the three-jaw chuck and the centering tip (11) of the superstructure (10).

6. Machine tool according to one of the preceding claims 2-5, **characterized in that** the workpiece (W) can be brought into the machining position by means of the centering tip (11).

7. Machine tool according to one of the claims 2-6, **characterized in that** the centering tip (11) is designed in the form of a revolving center and is exchangeably arranged in a sleeve (11.1).

8. Machine tool according to one of the preceding claims, **characterized in that** a vertical axis of rotation (A1) of the clamping unit and of the rotary table (3), a longitudinal axis (A2) of the centering tip (11) and a longitudinal workpiece axis (WA) of the workpiece (W) are aligned with one another.

9. Machine tool according to one of the preceding claims, **characterized in that** the superstructure (10) is designed symmetrically or substantially symmetrically in the Y-direction and/or in the Z-direction with respect to its vertically extending axis (AY).

10. Machine tool according to one of the preceding claims, **characterized in that** the superstructure (10) is reduced in its length and/or width from bottom to top symmetrically or substantially symmetrically.

11. Machine tool according to one of the preceding claims, **characterized in that** it can be used to carry out turning operations on workpieces in the form of journals, steering knuckles or other rotationally symmetrical components, which are clamped in the vertical direction, on the machining center.

## Revendications

1. Machine-outil, en particulier centre d'usinage, avec une unité de logement d'outil, laquelle machine-outil comprend un socle de machine (1) et un groupe de chariot (2) déplaçable sur l'axe Z sur le socle de machine (1) et une table tournante (3) logée sur le groupe de chariot (2) et munie d'une unité de serrage (9) pour une pièce à usiner (W) et d'un support (4) qui s'étend verticalement sur le socle de machine (1) et d'un outil d'usinage (5.1) supporté sur le support (4), qui est déplaçable sur le support (4) sur un axe Y vertical et un axe X horizontal, **caractérisée en ce qu'**une première surface de réception (2a) et une deuxième surface de réception (2b) sont disposées sur le groupe de chariot (2) déplaçable sur l'axe Z, de part et d'autre de la table tournante (3), et **en ce qu'**est disposée sur la première surface de réception (2a) et la deuxième surface de réception (2b) une superstructure qui s'étend vers le haut et au-dessus de la table tournante (3) et qui comprend des moyens pour fixer la pièce à usiner (W).

2. Machine-outil selon la revendication 1, **caractérisée en ce que** la superstructure (10) s'appuie par un premier support (10.1a) qui s'étend verticalement sur la première surface de réception (2a) et avec un deuxième support (10.1b) qui s'étend verticalement sur la deuxième surface de réception (2b), une traverse (10.2) s'appuyant sur les extrémités supérieures des premier et deuxième supports (10.1a, 10.1b) et une pointe de centrage (11) déplaçable verticalement au moyen d'un moteur de réglage (12) étant disposée au centre dans la traverse (10.2) de la superstructure (10) pour une fixation supplémentaire de la pièce à usiner (W), la pièce à usiner (W) pouvant être serrée entre l'unité de serrage (9) logée sur la table tournante (3) et la pointe de centrage (11).

3. Machine-outil selon la revendication 2, **caractérisée en ce que** la traverse (10.2) repose par ses deux faces inférieures (10.2.1) sur les extrémités supérieures des supports (10.1a, 10.1b) et s'étend ensuite en miroir vers le haut à partir de chaque face inférieure (10.2.1) selon un angle (a).

4. Machine-outil selon l'une des revendications précédentes, **caractérisée en ce que** le groupe de chariot (2) est supporté par l'intermédiaire de guides sur l'axe Z sur le socle de machine (2) et la première surface d'appui (2.a) et la deuxième surface d'appui (2b) du groupe de chariot (2) sont disposées sensiblement au-dessus des guides (2.1) du groupe de chariot (2) pour recevoir les supports (10.1a et 10.1b).

5. Machine-outil selon l'une des revendications 2 à 4, **caractérisée en ce que** l'unité de serrage comporte un mandrin d'entraînement ou un mandrin à mors avec une pointe de centrage orientable intégrée dans le mandrin, en particulier un mandrin à trois mors (9) avec pointe de centrage, et **en ce que** la pièce à usiner (W) peut être serrée entre la pointe de centrage du mandrin à trois mors et la pointe de centrage (11) de la superstructure (10).

6. Machine-outil selon l'une des revendications 2 à 5, **caractérisée en ce que** la pièce à usiner (W) peut être amenée dans la position d'usinage avec la pointe de centrage (11).

7. Machine-outil selon l'une des revendications 2 à 6, **caractérisée en ce que** la pointe de centrage (11) est conformée comme une pointe qui suit le mouvement et disposée de façon interchangeable dans un fourreau de broche (11.1).

8. Machine-outil selon l'une des revendications précédentes, **caractérisée en ce qu'**un axe de rotation vertical (A1) de l'unité de serrage et de la table tournante (3), un axe longitudinal (A2) de la pointe de centrage (11), ainsi qu'un axe longitudinal de pièce à usiner (WA) de la pièce à usiner (W), sont alignés les uns sur les autres.

9. Machine-outil selon l'une des revendications précédentes, **caractérisée en ce que** la superstructure (10) est réalisée de façon symétrique par rapport à son axe vertical (AY) ou sensiblement symétrique sur l'axe Y ou sur l'axe Z.

10. Machine-outil selon l'une des revendications précédentes, **caractérisée en ce que** la superstructure (10) se réduit en longueur et/ou en largeur du bas vers le haut de façon symétrique ou sensiblement symétrique.

11. Machine-outil selon l'une des revendications précédentes, **caractérisée en ce qu'**elle permet de réaliser l'usinage de pièces à usiner serrées dans le sens vertical en forme de tourillons, de fusées d'essieu et autres pièces symétriques en rotation par tournage sur le centre d'usinage.
